# EUROPÄISCHE PATENTANMELDUNG

(11) **EP 4 837 786 A1**
(43) Veröffentlichungstag der Anmeldung: **11.11.2026**
(21) Anmeldenummer: 26176184.5
(22) Anmeldetag: 04.05.2026
(51) Int. Cl.: B60Q 1/38, B60Q 1/26

(54) **ANZEIGEELEMENT FÜR KRAFTFAHRZEUGE**

(30) Priorität: 05.05.2025 DE 102025117111
(71) Anmelder: Hristov, Mladen, 10627 Berlin (DE)
(72) Erfinder: Hristov, Mladen, 10627 Berlin (DE)
(74) Vertreter: Gulde & Partner

(57) **Zusammenfassung**

Die Erfindung betrifft ein Anzeigeelement für Kraftfahrzeuge und ist anwendbar im Fahrzeugbau sowie bei der Nachrüstung von Kraftfahrzeugen wie PKW und LKW. Das Anzeigeelement für Kraftfahrzeuge dient der Anzeige einer Kehrtwende der Fahrtrichtung und ist dadurch gekennzeichnet, dass das Anzeigeelement als Wendeanzeigeelement (1) ausgebildet und im Front- und/oder Heckbereich des Kraftfahrzeugs nachrüstbar oder auswechselbar angeordnet ist und ein elektrisch betriebenes Leuchtelement (2) aufweist, welches einen Wendepfeil (3) darstellt.

## Beschreibung

Die Erfindung betrifft ein Anzeigeelement für Kraftfahrzeuge und ist anwendbar im Fahrzeugbau sowie bei der Nachrüstung von Kraftfahrzeugen.

Ein bevorzugtes Anwendungsgebiet der Erfindung ist die Automobilindustrie, insbesondere die Fertigung und Nachrüstung von PKW und LKW.

Anzeigen für Fahrtrichtungsänderungen an Kraftfahrzeugen sind in vielfältiger Ausführung seit Langem bekannt. Allerdings können die herkömmlichen Anzeigen nur die Richtungsänderung nach rechts oder nach links signalisieren, nicht jedoch die Richtungsumkehr, also eine Wende.

Der Erfindung liegt die Aufgabe zugrunde, eine Anzeigeelement für Kraftfahrzeuge zur Anzeige einer beabsichtigten Wende zu schaffen, das einfach und preiswert herstellbar, leicht zu montieren und zuverlässig zu betreiben ist und die Nachteile herkömmlicher Anzeigeelemente vermeidet.

Diese Aufgabe wird gelöst durch die Merkmale im Anspruch 1. Zweckmäßige Ausgestaltungen der Erfindung sind in den Unteransprüchen enthalten.

Die Erfindung dient insbesondere der Herstellung des Anzeigeelementes als Wendeanzeigeelement, das auf ein Fahrzeugteil geklebt oder montiert werden kann, und welches im Betriebszustand für die Verkehrsteilnehmer von vorne bis hinten sichtbar ist.

Die Funktionen der Gerätekombination zum Betrieb des Wendeanzeigeelementes sind wie folgt.

Mit dem Wendeanzeigeelement erfolgt die Anzeige und Warnung aller Verkehrsteilnehmer mit einem Lichtsignal vor und während dem beabsichtigten Richtungswechsel in Form einer Wende.

Das Wendezeigeelement wird über einen eigenständigen, leicht am Armaturenbrett des Fahrzeugs zu befestigenden Schalter bedient. Die Verbindung zwischen dem Schalter und dem Wendezeigeelement erfolgt über ein Bluetooth-kodiertes Signal.

Die Form und Gestaltung des Wendezeigeelements ist in verschiedenen Varianten ausführbar, je nach Bedarf und Wunsch des Kunden. Es kann in verschiedenen Standardformen (rechteckig, rund, länglich, oval) ausgeführt sein, wobei die Möglichkeit besteht, es den Kundenwünschen entsprechend anzupassen.

Das Gehäuse besteht aus witterungsbeständigem Material (z. B. ABS-Kunststoff oder beschichtetes Aluminium).

Die Befestigung des Wendezeigeelements erfolgt über einen selbstklebenden Magneten oder eine mechanische Befestigung.

Für den selbstklebenden Mechanismus gelangen hochwertige Kleber zum Einsatz, die Vibrationen und Temperaturschwankungen standhalten.

Der magnetische Mechanismus bietet eine bequeme Lösung für eine Installation, die sich leicht anbringen und wieder entfernen lässt.

Eine mechanische Befestigung mit Befestigungselementen ist zweckmäßig für eine dauerhafte Installation.

Die Energieversorgung erfolgt alternativ über Solarelemente, den Anschluss an eine Stromquelle des Fahrzeugs oder eine eigenständige Batterie.

Ein eingebautes Solarpanel auf oder in oder an dem Wendeanzeigeelement dient dazu, um die Batterie tagsüber aufzuladen.

Ein direkter Anschluss an das Stromnetz des Fahrzeugs ermöglicht einen stabilen Betrieb, ohne dass ein Aufladen erforderlich ist.

Eine eigenständige Batterie oder ein Akku in Form eines langlebigen Lithium-Ionen-Akkus mit Ladestandanzeige sichert ebenfalls eine zuverlässige Energieversorgung.

Der Schalter ist mit einer Software ausgestattet, die die Aktivierung des Leuchtelements und die Aktivierung des akustischen Signals steuert.

Eine zusätzliche Funktion im Zusammenhang mit dem Wendeanzeigeelement ist die automatische Abschaltung. Bleibt die Taste des Schalters eine bestimmte Zeit lang aktiv (z. B. einige Minuten), schaltet sich das Gerät automatisch ab, um unnötigen Gebrauch zu vermeiden.

Mittels Bewegungssensoren kann die Bewegung des Fahrzeugs erkannt werden, und zum richtigen Zeitpunkt ein- oder auszuschalten.

Die Steuerung und Anpassung der Einstellungen erfolgt über das Smartphone.

Das Wendeanzeigeelement weist ein Leuchtelement in Form einer LED-Matrix oder von leistungsstarken Dioden auf, die ein bevorstehendes Abbiegezeichen in Form eines Wendepfeils deutlich anzeigen. Der Wendepfeil stellt die Fahrtrichtungsänderung um 180 Grad dar.

Die Signale sind so gestaltet, dass sie von allen Verkehrsteilnehmern verstanden werden können. Die Lichter blinken mit hoher für das menschliche Auge sichtbarer Frequenz, um die Sichtbarkeit und Aufmerksamkeit zu erhöhen.

Zur Bluetooth-Steuerung ist en Schalter mit kompaktem und ästhetischem Design auf dem Armaturenbrett des Fahrzeugs angebracht.

Der Schalter weist eine Beleuchtung auf, welche ebenfalls den blinkenden Wendepfeil anzeigt.

Die Verbindung zwischen dem Schalter und dem Wendeanzeigeelement erfolgt über Bluetooth mit verschlüsselter Kommunikation, um unbefugte Störungen zu vermeiden. Die Software weist eine automatische Verbindungsfunktion nach der Ersteinrichtung auf.

Nachfolgend wird ein beispielhaftes Nutzungsszenario beschrieben.

Der Fahrer plant eine Wendung und betätigt den Schalter in Form einer Taste auf dem Armaturenbrett. Dem Fahrer wird über die im Schalter integrierte Beleuchtung die Aktivierung des Leuchtelements angezeigt.

Das Leuchtelement in dem Wendeanzeigeelement am Front- und Heckbereich des Fahrzeugs leuchtet mit einem deutlichen und sichtbaren Signal in Form eines Wendepfeils auf und warnt andere Verkehrsteilnehmer.

Nach dem Abbiegen und der erfolgten Wende betätigt der Fahrer erneut den Schalter, oder das Wendeanzeigeelement schaltet das Leuchtelement nach einer bestimmten Zeit automatisch ab.

Die Vorteile des Wendeanzeigeelements sind
- Verbessert die Sichtbarkeit und Kommunikation im Straßenverkehr
- Einfache Installation und zu Wartung
- Flexibilität bei Design und Stromversorgung
- Erhöhte Sicherheit bei komplexen Fahrmanövern

Ein besonderer Vorteil der Erfindung besteht in der Verbesserung der Verkehrssicherheit bei gleichzeitig hohem Komfort und hoher Ästhetik, indem das als Wendeanzeigeelement für Kraftfahrzeuge ausgebildete Anzeigeelement zur Anzeige einer Kehrtwende der Fahrtrichtung ein elektrisch betriebenes Leuchtelement aufweist und im Front- und/oder Heckbereich des Kraftfahrzeugs nachrüstbar oder auswechselbar angeordnet ist.

Ein zusätzlicher Vorteil hinsichtlich einer einfachen Installation ist, dass das Wendeanzeigeelement mit Leuchtelement an der Karosserie des Kraftfahrzeugs durch Magnetkraft oder durch Aufkleben mittels Klebstoff oder durch mechanische Befestigungselemente befestigt ist.

Vorteilhaft ist ebenfalls, dass das Leuchtelement eine eigene interne Stromversorgung aufweist oder mit der Bordelektrik des Kraftfahrzeugs elektrisch verbunden ist.

Weitere Vorteile der Erfindung resultieren daraus, dass das Ein/Ausschalten und die Ansteuerung des Leuchtelements über einen Schalter im Fahrzeuginnenraum des Kraftfahrzeugs erfolgt und der Schalter am Armaturenbrett des Kraftfahrzeugs befestigt ist.

Die Verbindung zwischen dem Schalter und dem Leuchtelement erfolgt über Bluetooths.

Der Schalter ist mit einer Software verbunden, die die Aktivierung des Niveaus und die Aktivierung des akustischen Signals steuert.

Das Leuchtelement weist eine LED Matrix und/oder leistungsstarke Leuchtdioden auf. Das Leuchtelement blinkt mit hoher durch das menschliche Auge erfassbarer Frequenz.

Das Wendeanzeigeelement ist rechteckig oder kreisförmig oder oval ausgebildet und besteht aus witterungsbeständigem Material wie beispielsweise ABS Kunststoff und/oder beschichtetem Aluminium.

Ein weiterer Vorteil der Erfindung ist, dass das Wendeanzeigeelement Solarelemente aufweist, die zur Energieversorgung des Leuchtelements beitragen und dass das Wendeanzeigeelement mit Bewegungssensoren zusammenwirkt.

Die Erfindung soll nachstehend an Hand von zumindest teilweise in den Figuren dargestellten Ausführungsbeispielen näher erläutert werden. Es zeigen:
- Fig.1: eine Prinzipdarstellung des erfindungsgemäßen Wendeanzeigeelements im Frontbereich eines PKW
- Fig.2: eine Detaildarstellung der erfindungsgemäßen Wendeanzeigeelements im Heckbereich eines LKW

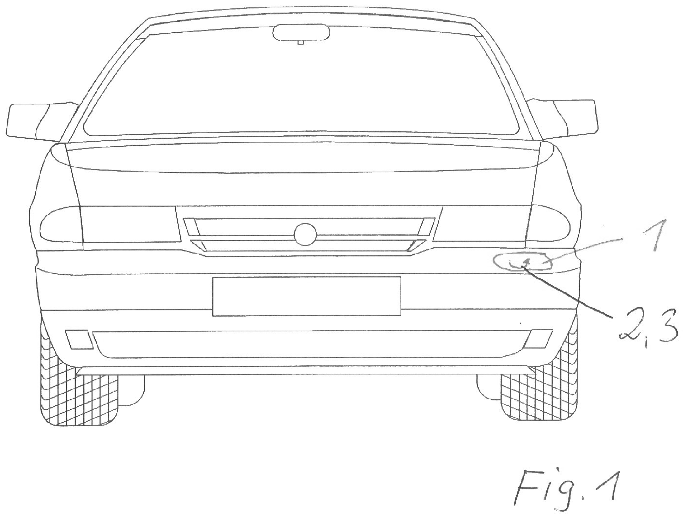

Fig. 1 zeigt ein im vorliegenden Ausführungsbeispiel im Frontbereich eines PKW angeordnetes Wendeanzeigeelement 1 mit einem elektrisch betriebenen Leuchtelement 2, welches nachrüstbar oder auswechselbar angeordnet ist. Das Leuchtelement 2 stellt einen Wendepfeil 3 dar.

Die Befestigung des Wendeanzeigeelements 1 an der Karosserie des PKW erfolgt im vorliegenden Ausführungsbeispiel durch Magnetkraft mittels einem an dem Wendeanzeigeelement 1 angeordneten Magnet. Damit ist das Wendeanzeigeelement 1 einfach nachrüstbar.

Selbstverständlich ist auch eine Befestigung durch Aufkleben mittels Klebstoff oder durch mechanische Befestigungselemente möglich

Das Leuchtelement 2 weist im vorliegenden Ausführungsbeispiel eine eigene interne Stromversorgung mit einem langlebigen Lithium-Ionen-Akkus mit Ladestandanzeige auf. Alternativ hierzu kann das Leuchtelement 2 mit der Bordelektrik des Kraftfahrzeugs elektrisch verbunden sein.

Das Ein/Ausschalten und die Ansteuerung des Leuchtelements 2 erfolgt über einen Schalter im Fahrzeuginnenraum des Kraftfahrzeugs, wobei der Schalter am Armaturenbrett des Kraftfahrzeugs befestigt ist.

Die Verbindung zwischen dem Schalter und dem Leuchtelement 2 erfolgt über Bluetooths.

Der Schalter ist mit einer Software verbunden, die die Aktivierung des Niveaus und die Aktivierung des akustischen Signals steuert.

Das Leuchtelement 2 ist eine LED Matrix, die mit hoher durch das menschliche Auge erfassbarer Frequenz blinkt.

Das Wendeanzeigeelement 1 ist im vorliegenden Ausführungsbeispiel oval ausgebildet und besteht aus witterungsbeständigem Material wie beispielsweise ABS Kunststoff.

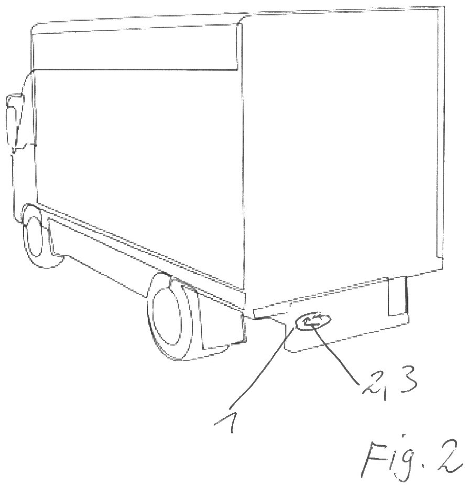

Fig. 2 zeigt ein im vorliegenden Ausführungsbeispiel im Heckbereich eines LKW angeordnetes Wendeanzeigeelement 1 mit einem elektrisch betriebenen Leuchtelement 2. Das Wendeanzeigeelement 1 ist nachrüstbar oder auswechselbar angeordnet. Das Leuchtelement 2 stellt auch hier einen Wendepfeil 3 dar. Die Details sind analog dem Ausführungsbeispiel wie zu Fig. 1 beschrieben.

Die Erfindung ist nicht beschränkt auf die dargestellten Ausführungsvarianten. Vielmehr ist es möglich, durch Kombination und Variation der aufgezeigten Mittel und Merkmale weitere Ausführungsvarianten zu realisieren, ohne den Rahmen der Erfindung zu verlassen.

### Bezugszeichenliste

1 Wendeanzeigeelement
2 Leuchtelement
3 Wendepfeil

## Patentansprüche

1. Anzeigeelement für Kraftfahrzeuge zur Anzeige einer Kehrtwende der Fahrtrichtung, **dadurch gekennzeichnet, dass** das Anzeigeelement als Wendeanzeigeelement (1) ausgebildet und im Front- und/oder Heckbereich des Kraftfahrzeugs nachrüstbar oder auswechselbar angeordnet ist und ein elektrisch betriebenes Leuchtelement (2) aufweist, welches einen Wendepfeil (3) darstellt.

2. Anzeigeelement nach Anspruch 1, **dadurch gekennzeichnet, dass** das Wendeanzeigeelement (1) an der Karosserie des Kraftfahrzeugs durch Magnetkraft befestigt ist.

3. Anzeigeelement nach Anspruch 1, **dadurch gekennzeichnet, dass** das Wendeanzeigeelement (1) durch Aufkleben mittels Klebstoff oder durch mechanische Befestigungselemente befestigt ist.

4. Anzeigeelement nach Anspruch 1, **dadurch gekennzeichnet, dass** das Leuchtelement (2) eine eigene interne Stromversorgung aufweist.

5. Anzeigeelement nach Anspruch 1, **dadurch gekennzeichnet, dass** das Leuchtelement (2) mit der Bordelektrik des Kraftfahrzeugs elektrisch verbunden ist.

6. Anzeigeelement nach Anspruch 1, **dadurch gekennzeichnet, dass** das Ein/Ausschalten und die Ansteuerung des Leuchtelements (2) über einen Schalter im Fahrzeuginnenraum des Kraftfahrzeugs erfolgt.

7. Anzeigeelement nach Anspruch 6, **dadurch gekennzeichnet, dass** der Schalter am Armaturenbrett des Kraftfahrzeugs befestigt ist.

8. Anzeigeelement nach Anspruch 6, **dadurch gekennzeichnet, dass** die Verbindung zwischen dem Schalter und dem Leuchtelement (2) über Bluetooths erfolgt.

9. Anzeigeelement nach einem der Ansprüche 6 bis 8, **dadurch gekennzeichnet, dass** der Schalter mit einer Software verbunden ist, die die Aktivierung des Niveaus und die Aktivierung des akustischen Signals steuert.

10. Anzeigeelement nach Anspruch 1, **dadurch gekennzeichnet, dass** das Leuchtelement (2) eine LED Matrix und/oder leistungsstarke Leuchtdioden aufweist, welche den Wendepfeil (3) darstellen.

11. Anzeigeelement nach Anspruch 1, **dadurch gekennzeichnet, dass** das Leuchtelement (2) mit hoher durch das menschliche Auge erfassbarer Frequenz blinkt.

12. Anzeigeelement nach Anspruch 1, **dadurch gekennzeichnet, dass** das Wendeanzeigeelement (1) rechteckig oder kreisförmig oder oval ausgebildet ist.

13. Anzeigeelement nach Anspruch 1, **dadurch gekennzeichnet, dass** das Wendeanzeigeelement (1) aus witterungsbeständigem Material wie beispielsweise ABS Kunststoff und/oder beschichtetem Aluminium besteht.

14. Anzeigeelement nach Anspruch 1, **dadurch gekennzeichnet, dass** das Wendeanzeigeelement (1) Solarelemente aufweist, die zur Energieversorgung des Leuchtelements (2) beitragen.

15. Anzeigeelement nach Anspruch 1, **dadurch gekennzeichnet, dass** das Wendeanzeigeelement (1) mit Bewegungssensoren zusammenwirkt.
